# EUROPEAN PATENT APPLICATION

(11) **EP 4 331 956 A1**
(43) Date of publication of application: **06.03.2024**
(21) Application number: 22794260.4
(22) Date of filing: 09.02.2022
(51) Int. Cl.: B62D 25/24, E05F 15/70, B60L 53/66

(54) **CHARGING DEVICE, CHARGING PORT COVER CONTROL DEVICE, CHARGING SYSTEM, AND RELATED METHOD**

(30) Priority: 26.04.2021 CN 202110451756
(71) Applicant: Changchun Jetty Automotive Technology Co., Ltd., Changchun City, Jilin Province 130000 (CN)
(72) Inventor: WANG, Chao, Changchun, Jilin 130000 (CN)
(74) Representative: Habermann, Hruschka & Schnabel
(86) International application number: PCT/CN2022/075584
(87) International publication number: WO 2022/227779

(57) **Abstract**

A charging device, a charging cover control device, a charging system and a related method are provided. When receiving a startup instruction, the charging device (100) generates and encrypts a first control instruction, and sends encrypted first control instruction to the charging cover control device (200); the charging cover control device (200) receives and decrypts the first control instruction, and verifies identity information in the first control instruction; and when the verification of the identity information is successful, the charging cover is driven to be opened. Through the encrypted communication between the charging device (100) and the charging cover control device (200), the charging cover can be automatically controlled to be opened, which saves the redundant action of manually operating the charging cover and is more convenient and faster. Before controlling the charging cover to be opened, the charging cover control device (200) verifies identity of the charging device, and the charging cover will not be opened unless the identity verification is successful, thereby avoiding the potential safety hazards caused by charging the electric vehicle ad arbitrium by any charging device.

## Description

### CROSS-REFERENCE TO RELATED APPLICATIONS

The application claims priority to Chinese Patent Application NO. 202110451756.8, entitled 'charging device, charging cover control device, charging system and related method', and filed on April 26, 2021, which is hereby incorporated by reference in its entirety.

### TECHNICAL FIELD

The present disclosure relates to the technical field of automobiles, and particularly to a charging device, a charging cover control device, a charging system and a related method for an electric vehicle.

### BACKGROUND

With the rapid development of the electric vehicles, the market share thereof in the field of automobiles is increasing. The electric vehicles have the characteristics of no pollution, low noise and high energy efficiency.

The electric vehicles are usually powered by on-board power supplies, and driven by electric motors instead of fuel engines. At present, the storage battery is the most widely used power supply for the electric vehicles, and a charging port of the storage battery is usually provided with a charging cover for protection. The charging cover needs to be opened manually when the battery is to be charged, and then closed after the charging is finished, which is not only cumbersome to operate, but also impossible to choose the charging device independently. In addition, if the vehicle is charged with an illegal charging device, great potential safety hazards may be caused to the power supply of the vehicle.

### SUMMARY

The embodiments of the present disclosure provide a charging device, a charging cover control device, a charging system and a related method for an electric vehicle, which are configured to control a charging cover of the electric vehicle to be automatically opened or closed and improve the charging safety of the electric vehicle.

In a first aspect, an embodiment of the present disclosure provides a charging device of an electric vehicle, including: a response controller, an encoder and a first signal sender, in which the response controller is configured to send a first control instruction to the encoder when receiving a startup instruction, and the first control instruction includes identity information for identifying the charging device; the encoder is configured to receive and encrypt the first control instruction, and send encrypted first control instruction to the first signal sender; and the first signal sender is configured to send the encrypted first control instruction to the electric vehicle, so that a charging cover of the electric vehicle is in an open status.

The electric vehicle verifies the identity information in the first control instruction sent by the charging device, and controls the charging cover to be opened automatically when the verification is successful. The control instruction sent by the charging device is an encrypted message, and the repetition rate of the expression form of each control instruction after encryption is extremely low, so that the need to copy the control instruction may be avoided, thereby improving the safety of the information interaction between the charging device and the electric vehicle.

In some embodiment of the present disclosure, the charging device further includes a first signal receiver, which is configured to receive a wake-up signal sent by the electric vehicle and send the wake-up signal to the response controller, and the wake-up signal is configured to activate the charging device to communicate with the electric vehicle and includes an activation code for activating the response controller; and the response controller is configured to receive and verify the wake-up signal, and send the first control instruction to the encoder when the verification of the activation code in the wake-up signal is successful.

By waking up the charging device with the activation code verification mechanism, it is possible to effectively avoid the interference of signals from other devices to the charging device and prevent the charging device from being started by mistake.

In some embodiments of the present disclosure, the response controller is configured to stop sending the first control instruction to the electric vehicle when the wake-up signal is not received, so that the charging cover of the electric vehicle is in a closed status.

The electric vehicle automatically closes the charging cover when the first control instruction is not received, thereby simplifying the communication procedure and making the control more convenient.

In some embodiments of the present disclosure, the response controller is configured to send a second control instruction to the encoder when the wake-up signal is not received, and the second control instruction includes identity information for identifying the charging device; the encoder is configured to receive and encrypt the second control instruction, and send encrypted second control instruction to the first signal sender; and the first signal sender is configured to send the encrypted second control instruction to the electric vehicle, so that the charging cover of the electric vehicle is in a closed status.

The charging device is configured with an encrypted communication, and during the charging of the electric vehicle, the charging cover is automatically opened when the charging device sends a first control instruction. After the charging is finished, the charging cover is automatically closed when the charging device sends a second control instruction. Therefore, the interference of other signals is prevented, the maloperation on the charging cover is avoided, and the communication safety of the charging device is improved.

In some embodiments of the present disclosure, each of the wake-up signal, the first control signal and the second control signal may be configured with one of a low frequency signal, a radio frequency signal, a Bluetooth signal, a mobile communication signal, a WIFI signal or an infrared signal, as long as the communication procedure of the charging device can be finished, and the form of carrier signal may be flexibly set based on actual needs.

In some embodiments of the present disclosure, the wake-up signal is configured with a low-frequency signal, and the first control instruction and the second control instruction are configured with radio-frequency signals. The low-frequency signal changes slowly with a smooth waveform, which is suitable for near-field communications. The radio frequency signal is suitable for occasions requiring a long read and write distance and a high read and write speed. The application requirements can be better satisfied when the wake-up signal is configured with a low-frequency signal, and the first control instruction and the second control instruction are configured with radio-frequency signals.

In some embodiments of the present disclosure, a frequency of the wake-up signal is 30 KHz to 300 KHz, a frequency of the first control instruction is 300 KHz to 300 GHz, and a frequency of the second control instruction is 300 KHz to 300 GHz.

In some embodiments of the present disclosure, a three-dimensional low-frequency antenna is provided in the first signal receiver. The three-dimensional low-frequency antenna can effectively receive the wake-up signal, and ensure that the charging device can detect the same field strength at any angle by superimposing the three-dimensional energies, thereby effectively preventing the signal from being not received due to interferences.

In a second aspect, an embodiment of the present disclosure provides a charging cover control device of an electric vehicle, includes: a second signal receiver, a decoder, a processor and a motor driver, in which the motor driver is connected to a charging cover motor of the electric vehicle, and the charging cover motor drives the charging cover to be opened or closed; the second signal receiver is configured to receive a first control instruction sent by the charging device and send the first control instruction to the decoder, and the first control instruction includes identity information for identifying the charging device; the decoder is configured to decrypt the first control instruction and send decrypted first control instruction to the processor; the processor is configured to receive decrypted first control instruction, verify the identity information in the first control instruction, and send a cover open instruction indicating to open the charging cover to the motor driver when the verification of the identity information is successful; and the motor driver is configured to drive the charging cover motor based on the cover open instruction to make the charging cover in an open status. The processor sends a cover close instruction indicating to close the charging cover to the motor driver when the verification of the identity information is failed; and the motor driver drives the charging cover motor based on the cover close instruction to make the charging cover in a closed status.

When the electric vehicle needs to be charged, the charging cover control device receives a first control instruction sent by the charging device, and the first control instruction is an encrypted message and may be decrypted by the charging cover control device, thereby improving the communication safety between the charging device and the charging cover control device. The charging cover control device further verifies the identity information in the first control instruction, and when the verification of the identity information is successful, it means that the current charging device is a registered safe device, and the charging cover control device automatically opens the charging cover. When the verification of the identity information is failed, it means that the current charging device is not registered and the safety cannot be guaranteed. At this time, the charging cover control device controls the charging cover to keep a closed status, thereby improving the charging safety of the electric vehicle.

In some embodiments of the present disclosure, the charging cover control device further includes a second signal sender, which is configured to send a wake-up signal to surroundings of the electric vehicle when the electric vehicle needs to be charged, and the wake-up signal is configured to activate the charging device to communicate with the electric vehicle and includes an activation code for activating the charging device.

The charging cover control device may also actively activate the charging device. When entering a coverage range of the wake-up signal, the charging device receives the wake-up signal, so as to enter the working status by verifying the activation code in the wake-up signal. With the activation code verification mechanism, it is possible to avoid the influence of signals sent by other devices on the charging device, prevent the charging device from being started by mistake, while making the communication between the charging device and the charging cover control device be safer and more effective.

In some embodiments of the present disclosure, the first control instruction further includes first indication information indicating to open the charging cover; and the processor is configured to verify the identity information in the first control instruction, and send a cover open instruction indicating to open the charging cover to the motor driver based on the first indication information when the verification of the identity information is successful.

Indication information is added into the first control instruction, so that the charging cover control device can perform a corresponding operation based on the instruction, and effectively prevent the maloperation.

In some embodiments of the present disclosure, the processor is configured to send a cover close instruction indicating to close the charging cover to the motor driver when the first control instruction is not received; and the motor driver is configured to drive the charging cover motor based on the cover close instruction to make the charging cover in a closed status.

When the first control instruction is not received, the charging cover is directly controlled to be closed, which simplifies the communication procedure between the charging device and the charging cover control device and is more convenient.

In some embodiments of the present disclosure, the second signal receiver is configured to receive a second control instruction sent by the charging device and send the second control instruction to the decoder, and the second control instruction includes identity information for identifying the charging device and second indication information indicating to close the charging cover; the decoder is configured to decrypt the second control instruction and send decrypted second control instruction to the processor; the processor is configured to receive the decrypted second control instruction, verify the identity information in the second control instruction, and send a cover close instruction indicating to close the charging cover to the motor driver based on the second indication information when the verification of the identity information is successful; and the motor driver is configured to drive the charging cover motor based on the cover close instruction to make the charging cover in a closed status.

By controlling the charging cover to be closed with the second control instruction, it is possible to prevent the interference of other signals, avoid the maloperation on the charging cover, and improve the communication safety between the charging device and the charging cover control device.

In some embodiments of the present disclosure, each of the wake-up signal, the first control signal and the second control signal may be configured with one of a low frequency signal, a radio frequency signal, a Bluetooth signal, a mobile communication signal, a WIFI signal or an infrared signal, as long as the communication procedure of the charging device can be finished, and the form of carrier signal may be flexibly set based on actual needs.

In some embodiments of the present disclosure, the wake-up signal is configured with a low-frequency signal, and the first control instruction and the second control instruction are configured with radio-frequency signals. The low-frequency signal changes slowly with a smooth waveform, which is suitable for near-field communications. The radio frequency signal is suitable for occasions requiring a long read and write distance and a high read and write speed. The application requirements can be better satisfied when the wake-up signal is configured with a low-frequency signal, and the first control instruction and the second control instruction are configured with radio-frequency signals.

In some embodiments of the present disclosure, a frequency of the wake-up signal is 30 KHz to 300 KHz, a frequency of the first control instruction is 300 KHz to 300 GHz, and a frequency of the second control instruction is 300 KHz to 300 GHz.

In some embodiments of the present disclosure, a radio frequency antenna is provided in the second signal receiver. By adding the radio frequency antenna, it is possible to avoid the situation that the first control signal or the second control signal is not received by the charging cover control device.

In a third aspect, an embodiment of the present disclosure provides an electric vehicle, including any one of the aforementioned charging cover control devices; the charging cover control device is connected to a charging cover motor of the electric vehicle, and the charging cover motor drives a charging cover to be opened or closed. The charging cover control device may be provided at a mechanical connection near a charging port of the electric vehicle, and the charging cover control device can automatically control the opening or closing of the charging cover by communicating with the charging device.

In a fourth aspect, an embodiment of the present disclosure provides a method for controlling a charging device of an electric vehicle, including: generating a first control instruction by a charging device when receiving a startup instruction, and the first control instruction includes identity information for identifying the charging device; encrypting the first control instruction; and sending encrypted first control instruction to the electric vehicle.

The electric vehicle verifies the identity information in the first control instruction sent by the charging device, and controls a charging cover to be opened automatically when the verification is successful. The control instruction sent by the charging device is an encrypted message, and the repetition rate of the expression form of each control instruction after encryption is extremely low, so that the need to copy the control instruction may be avoided, thereby improving the safety of the information interaction between the charging device and the electric vehicle.

In some embodiments of the present disclosure, when the received startup instruction is a wake-up signal sent by the electric vehicle, the wake-up signal is verified, and the wake-up signal is configured to activate the charging device to communicate with the electric vehicle and includes an activation code for activating the response controller; and the first control instruction is generated when the verification of the activation code in the wake-up signal is successful.

By waking up the charging device with the activation code verification mechanism, it is possible to effectively avoid the interference of signals from other devices to the charging device and prevent the charging device from being started by mistake.

In some embodiments of the present disclosure, the charging device stops sending the first control instruction to the electric vehicle when the wake-up signal is not received, so that the charging cover of the electric vehicle is in a closed status.

When the first control instruction is not received, the electric vehicle automatically closes the charging cover, thereby simplifying the communication procedure and making the control more convenient.

In some embodiments of the present disclosure, the charging device generates a second control instruction when the wake-up signal is not received, and the second control instruction includes identity information for identifying the charging device; the second control instruction is encrypted and sent to the electric vehicle, so that the charging cover of the electric vehicle is in a closed status.

The charging device is configured with an encrypted communication, and during the charging of the electric vehicle, the charging cover is automatically opened when the charging device sends a first control instruction. After the charging is finished, the charging cover is automatically closed when the charging device sends a second control instruction. Therefore, the interference of other signals is prevented, the maloperation on the charging cover is avoided, and the communication safety of the charging device is improved.

In a fifth aspect, an embodiment of the present disclosure provides a method for controlling a charging cover control device of an electric vehicle, including: receiving, by charging cover control device, a first control instruction sent by a charging device, and the first control instruction includes identity information for identifying the charging device; decrypting the first control instruction; and verifying the identity information in the first control instruction; when the verification of the identity information is successful, generating a cover open instruction indicating to open the charging cover, so as to drive the charging cover motor to make the charging cover in an open status; and when the verification of the identity information is failed, generating a cover close instruction indicating to close the charging cover, so as to drive the charging cover motor to make the charging cover in a closed status.

When the electric vehicle needs to be charged, the charging cover control device receives a first control instruction sent by the charging device, and the first control instruction is an encrypted message and may be decrypted by the charging cover control device, thereby improving the communication safety between the charging device and the charging cover control device. The charging cover control device further verifies the identity information in the first control instruction. When the verification of the identity information is successful, it means that the current charging device is a registered safe device, and the charging cover control device automatically opens the charging cover. When the verification of identity information fails, it means that the current charging device is not registered and its safety cannot be guaranteed. At this time, the charging cover control device controls the charging cover to keep a closed status, thereby improving the charging safety of the electric vehicle.

In some embodiments of the present disclosure, the first control instruction further includes first indication information indicating to open the charging cover; and a cover open instruction indicating to open the charging cover is generated based on the first indication information when the verification of the identity information is successful.

Indication information is added into the first control instruction, so that the charging cover control device can perform a corresponding operation based on the instruction, and effectively prevent the maloperation.

In some embodiments of the present disclosure, when the first control instruction sent by the charging device is not received, the charging cover control device generates a cover close instruction indicating to close the charging cover, so as to drive the charging cover motor to make the charging cover in a closed status.

When the first control instruction is not received, the charging cover is directly controlled to be closed, which simplifies the communication procedure between the charging device and the charging cover control device and is more convenient.

In some embodiments of the present disclosure, the second signal receiver receives a second control instruction sent by the charging device, and the second control instruction includes identity information for identifying the charging device and second indication information indicating to close the charging cover; the second control instruction is decrypted; and the identity information in the second control instruction is verified; when the verification of the identity information is successful, a cover close instruction indicating to close the charging cover is generated, so as to drive the charging cover motor to make the charging cover in a closed status.

By controlling the charging cover to be closed with the second control instruction, it is possible to prevent the interference of other signals, avoid the maloperation on the charging cover, and improve the communication safety between the charging device and the charging cover control device.

In some embodiments of the present disclosure, before receiving the first control instruction sent by the charging device, the charging cover control device sends a wake-up signal to surroundings of the electric vehicle when the electric vehicle needs to be charged, and the wake-up signal is configured to activate the charging device to communicate with the electric vehicle and includes an activation code for activating the charging device.

The charging cover control device may also actively activate the charging device. When entering a coverage range of the wake-up signal, the charging device receives the wake-up signal, so as to enter the working status by verifying the activation code in the wake-up signal. With the activation code verification mechanism, it is possible to avoid the influence of signals sent by other devices on the charging device, prevent the charging device from being started by mistake, while making the communication between the charging device and the charging cover control device be safer and more effective.

In a sixth aspect, an embodiment of the present disclosure provides a method for controlling a charging cover of an electric vehicle, including: when receiving a startup instruction by a charging device, generating and encrypting a first control instruction, and sending encrypted first control instruction to the charging cover control device, and the first control instruction includes identity information for identifying the charging device; by the charging cover control device, receiving and decrypting the first control instruction, and verifying the identity information in the first control instruction; and when the verification of the identity information is successful, generating a cover open instruction indicating to open the charging cover, so as to drive the charging cover motor to make the charging cover in an open status.

Through the encrypted communication between the charging device and the charging cover control device, the charging cover may be automatically controlled to be opened, which saves the redundant action of manually operating the charging cover and is more convenient and faster without touching the vehicle body. In addition, before the charging cover is controlled to be opened, the charging cover control device verifies identity of the charging device, and the charging cover will not be opened unless the identity verification is successful, thereby avoiding the potential safety hazards caused by charging the electric vehicle ad arbitrium by any charging device.

In a seventh aspect, an embodiment of the present disclosure provides a charging system of an electric vehicle, including any one of the aforementioned charging devices and any one of the aforementioned charging cover control devices, and when receiving a startup instruction, the charging device generates and encrypts a first control instruction, and sends encrypted first control instruction to the charging cover control device, and the first control instruction includes identity information for identifying the charging device; the charging cover control device receives and decrypts the first control instruction, and verifies the identity information in the first control instruction; and when the verification of the identity information is successful, a cover open instruction indicating to open the charging cover is generated, so as to drive the charging cover motor to make the charging cover in an open status.

Through the encrypted communication between the charging device and the charging cover control device, the charging cover may be automatically controlled to be opened, which saves the redundant action of manually operating the charging cover and is more convenient and faster without touching the vehicle body. In addition, before the charging cover is controlled to be opened, the charging cover control device verifies identity of the charging device, and the charging cover will not be opened unless the identity verification is successful, thereby avoiding the potential safety hazards caused by charging the electric vehicle ad arbitrium by any charging device.

In some embodiments of the present disclosure, the charging cover control device sends a wake-up signal to surroundings of the electric vehicle when the electric vehicle needs to be charged, and the wake-up signal is configured to activate the charging device to communicate with the electric vehicle and includes an activation code for activating the charging device; and the charging device receives and verifies the wake-up signal, and generates the first control instruction when the verification of the activation code in the wake-up signal is successful.

The charging cover control device may also actively activate the charging device. When entering a coverage range of the wake-up signal, the charging device receives the wake-up signal, so as to enter the working status by verifying the activation code in the wake-up signal. With the activation code verification mechanism, it is possible to avoid the influence of signals sent by other devices on the charging device, prevent the charging device from being started by mistake, while making the communication between the charging device and the charging cover control device be safer and more effective.

In some embodiments of the present disclosure, the first control instruction further includes first indication information indicating to open the charging cover; and the charging cover control device verifies the identity information in the first control instruction, and when the verification of the identity information is successful, generates a cover open instruction indicating to open the charging cover based on the first indication information, so as to drive the charging cover motor to make the charging cover in an open status.

Indication information is added into the first control instruction, so that the charging cover control device can perform a corresponding operation based on the instruction, and effectively prevent the maloperation.

In some embodiments of the present disclosure, when the wake-up signal is not received, the charging device stops sending the first control instruction; and when the first control instruction is not received, the charging cover control device generates a cover close instruction indicating to close the charging cover, so as to drive the charging cover motor to make the charging cover in a closed status.

The charging cover control device directly controls the charging cover to be closed when the first control instruction is not received, which simplifies the communication procedure between the charging device and the charging cover control device and is more convenient.

In some embodiments of the present disclosure, when the wake-up signal is not received, the charging device generates and encrypts a second control instruction, and sends encrypted second control instruction to the charging cover control device, and the second control instruction includes identity information for identifying the charging device; the charging cover control device receives and decrypts the second control instruction, and verifies the identity information in the second control instruction; and when the verification of the identity information is successful, a cover close instruction indicating to close the charging cover is generated, so as to drive the charging cover motor to make the charging cover in a closed status.

The charging device is configured with an encrypted communication, and during the charging of the electric vehicle, the charging cover is automatically opened when the charging device sends a first control instruction. After the charging is finished, the charging cover is automatically closed when the charging device sends a second control instruction. Therefore, the interference of other signals is prevented, the maloperation on the charging cover is avoided, and the communication safety of the charging device is improved.

### BRIEF DESCRIPTION OF THE DRAWINGS

In order to more clearly illustrate the technical solutions in the embodiments of the present disclosure, the drawings to be used in the description of the embodiments will be briefly introduced below. Obviously, the drawings in the following description only illustrate some embodiments of the present disclosure, and other drawings can be obtained by those of ordinary skill in the art from these drawings without paying creative labor.
FIG. 1 is a structural schematic diagram of a charging device according to an embodiment of the present disclosure;
FIG. 2 is a structural schematic diagram of a charging cover control device according to an embodiment of the present disclosure;
FIG. 3 is another structural schematic diagram of a charging cover control device according to an embodiment of the present disclosure;
FIG. 4 is another structural schematic diagram of a charging device according to an embodiment of the present disclosure;
FIG. 5 is a flowchart of a method for controlling a charging device according to an embodiment of the present disclosure;
FIG. 6 is a flowchart of a method for controlling a charging cover control device according to an embodiment of the present disclosure;
FIG. 7 is a schematic structural diagram of a charging system according to an embodiment of the present disclosure.

In which,
100-charging device, 200-charging cover control device, 11-response controller, 12-encoder, 13-first signal sender, 14-first signal receiver, 15-three-dimentional low-frequency antenna, 21-second signal receiver, 22-decoder, 23-processor, 24-motor driver, 25-second signal sender, 26-low-frequency antenna, and 27-radio frequency antenna.

### DETAILED DESCRIPTION

In order that the above objectives, features and advantages of the present disclosure are more obvious and understandable, the present disclosure will be further illustrated with reference to the drawings and the embodiments. However, the exemplary embodiments may be implemented in various forms and should not be construed as being limited to those set forth here. On the contrary, these embodiments are provided to make the present disclosure thorough and complete, and to fully convey the concept of the exemplary embodiments to those skilled in the art. In the drawings, the same reference numerals denote the same or similar structures, and the repeated description thereof is omitted. The terms described in the present disclosure to express positions and directions are all illustrated by taking the drawings as examples and may be changed as needed, and all the changes are included in the protection scope of the present disclosure. The drawings of the present disclosure are merely illustrative of relative positional relationships and do not represent any true scale.

An electric vehicle takes a battery pack as a power source, and uses a motor to convert electric energy into mechanical energy for driving the road. An electric drive and control system is the core of the electric vehicle, which is the biggest difference from the internal combustion engine vehicle. Other parts of the electric vehicle are substantially the same as those of the internal combustion engine vehicle. The electric drive and control system is composed of a driving motor, a power supply and a speed governing control device of the motor, etc.

The electric vehicle is usually provided with a charging gun holder at the body or the head of the vehicle, and the charging gun holder is connected to a battery in the vehicle. After a charging gun head on a charging pile is inserted into the charging gun holder, the vehicle may be charged. In order to protect the charging gun holder, a charging cover is usually provided on the charging gun holder. When the vehicle needs to be charged, the charging cover is manually opened, and after the charging is finished, the charging cover is manually closed. This way is not only cumbersome for operation, but also impossible to choose the charging device independently. If the vehicle is charged with an illegal charging device, great potential safety hazards may be caused to the power supply of the vehicle.

In view of the above problem, the embodiments of the present disclosure provide a charging device, a charging cover control device and an electric vehicle, which are used to automatically control the opening and closing of the charging cover as well as improving the charging safety of the electric vehicle.

The charging device may be a connector connected to the electric vehicle when charging the electric vehicle, or a power supply, a mobile power supply, etc., such as a charging pile, for directly charging the electric vehicle, which is not limited here. The charging cover control device is usually provided near a charging port (e.g., a mechanical connection piece of the charging port) of an electric vehicle. The charging cover control device is connected to a charging cover motor, and capable of controlling the charging cover motor to drive the charging cover to be opened or closed.

In the embodiment of the present disclosure, there is information interaction between the charging device and the charging cover control device. The charging cover control device verifies identity of the charging device, and will not control the charging cover of the electric vehicle to open unless the identity verification is successful, thereby greatly improving the charging safety of the electric vehicle.

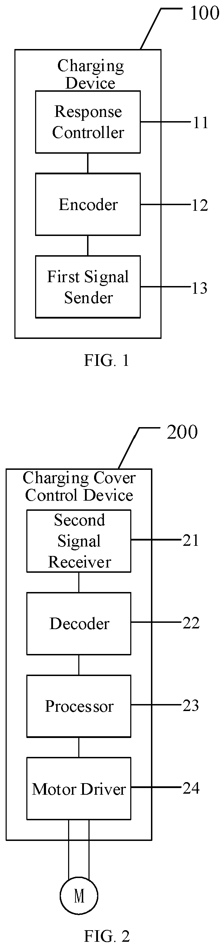

FIG. 1 is a structural schematic diagram of a charging device according to an embodiment of the present disclosure.

As illustrated in FIG. 1, the charging device 100 includes a response controller 11, an encoder 12 and a first signal sender 13.

The response controller 11 is a control component in the charging device 100. During working status, the response controller 11 generates a control instruction indicating to open the charging cover. The control instruction is encrypted by the encoder 12, and then sent to the electric vehicle by the first signal sender 13.

The control instruction sent by the charging device 100 is an encrypted message, and the repetition rate of the expression form of each control instruction after encryption is extremely low, so that the control instruction can be prevented from being copied, thereby improving the safety of the information interaction between the charging device 100 and the electric vehicle.

FIG. 2 is a structural schematic diagram of a charging cover control device according to an embodiment of the present disclosure.

As illustrated in FIG. 2, the charging cover control device 200 includes a second signal receiver 21, a decoder 22, a processor 23 and a motor driver 24, and the motor driver 24 is connected to the charging cover motor of the electric vehicle, and the charging cover motor drives the charging cover to be opened or closed.

The processor 23 is a control component in the charging cover control device 200, the second signal receiver 21 is configured to receive a control instruction sent by the charging device 100, the decoder 22 decodes the control instruction, and the processor verifies information in the received control instruction, and correspondingly controls the motor driver 24 based on an information verification result.

During implementation, when successfully verifying the information in the control instruction, the processor 23 sends an instruction indicating to open the charging cover to the motor driver 24, so as to control the charging cover motor to open the charging cover under the driving of the motor driver 24.

During the charging of the electric vehicle, the charging cover control device 200 automatically controls the charging cover to be opened, which saves the redundant action of manually operating the charging cover and is more convenient and faster without touching the vehicle body. In addition, before the charging cover is controlled to be opened, the charging cover control device verifies identity of the charging device, and the charging cover will not be opened unless the identity verification is successful, thereby avoiding the potential safety hazards caused by charging the electric vehicle ad arbitrium by any charging device.

The charging device and the charging cover control device in the embodiments of the present disclosure can realize the above information interaction on the premise that the charging device is registered its identity before charging the electric vehicle, and the identity information of registered charging device is stored in the processor of the charging cover control device. Thereafter, when the electric vehicle is charged, the charging cover control device is triggered to perform the identify verification of the charging device, and the charging cover will not be controlled correspondingly unless the identity verification is finished.

Specifically, for the charging device 100, the response controller 11 generates a first control instruction and sends it to the encoder 12 when receiving a startup instruction, and the first control instruction is configured to indicate the electric vehicle to open the charging cover, and includes identity information for identifying the charging device.

The encoder 12 receives and encrypts the first control instruction, and sends encrypted first control instruction to the first signal sender 13.

The first signal sender 13 sends the encrypted first control instruction to the charging cover control device 200 provided on the electric vehicle to indicate the electric vehicle to open the charging cover.

For the charging cover control device 200, the second signal receiver 21 receives the first control instruction sent by the charging device 100 and sends it to the decoder 22.

The decoder 22 decrypts the first control instruction and sends decrypted first control instruction to the processor 23.

The processor 23 receives decrypted first control instruction, verifies the identity information in the first control instruction, and sends a cover open instruction to the motor driver 24 when the verification of the identity information is successful.

The motor driver 24 drives the charging cover motor based on the cover open instruction to make the charging cover in an open status.

During implementation, there are many ways to start the charging device 100. For example, the charging device 100 may be provided with a switch, the switch may be a physical button on the charging device. When the charging device picked up by the user approaches a charging port of the electric vehicle, the button may be configured to control whether the charging device works or not. When the switch on the charging device 100 is turned on, the response controller 11 is started to work. When the switch on the charging device 100 is turned off, the response controller 11 sleeps.

After the charging device 100 is started, the response controller 11 generates a first control instruction carrying the identity information of the charging device, and the first control instruction is encrypted by the encoder 12 and then sent to the charging cover control device 200 of the electric vehicle by the first signal sender 13.

The first control instruction is received by the second signal receiver 21 in the charging cover control device 200, and decrypted by the decoder 22 to obtain the identity information of the charging device. The processor 23 verifies the identity information, and matches the identity information with the registered identity information stored locally. If the matching is successful, it means that the current charging device 100 is a registered safe device. At this time, the processor 23 sends a cover open instruction to the motor driver 24, and the motor driver 24 drives the charging cover motor to open the charging cover.

During the charging of the electric vehicle, the charging device 100 continuously sends the first control instruction to the charging cover control device 200, and the charging cover control instruction keeps the charging cover in an open status as long as the verification of the identity information is successful.

In another application scenario, when the verification of the identity information in the first control instruction is failed, the processor 23 in the charging cover control device 200 sends a cover close instruction indicating to close the charging cover to the motor driver 24. The motor driver 24 drives the charging cover motor based on the cover close instruction to make the charging cover in a closed status.

The processor 23 matches the obtained identity information with the registered identity information stored locally. If the matching is failed, it means that the current charging device 100 is unregistered and whether it is a safe device cannot be determined. At this time, the processor 23 sends a cover close instruction to the motor driver 24, and the motor driver 24 drives the charging cover motor into a closed status, thereby improving the charging safety of the electric vehicle.

In another implementable way, the charging cover control device 200 may actively send a wake-up signal to surrounding charging device 100 when the electric vehicle needs to be charged, thereby waking up the charging devices 100 to work, and omitting the step of manually operating the charging devices 100.

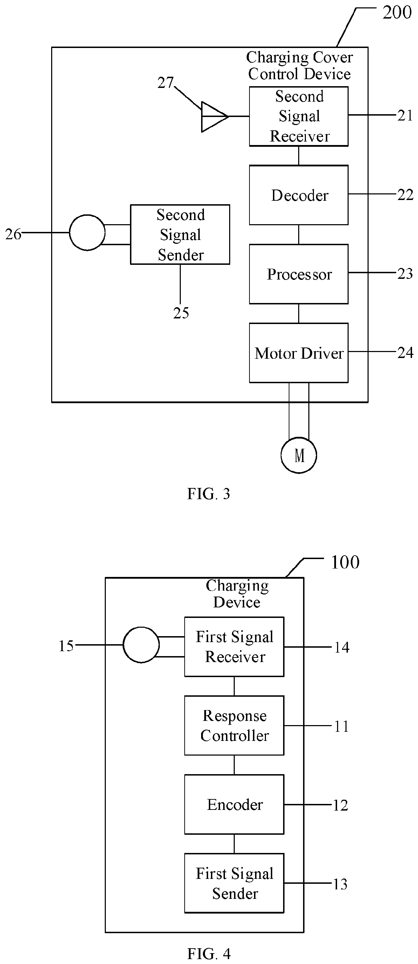

Referring specifically to FIGS. 3 and 4, in which FIG. 3 is another structural schematic diagram of a charging cover control device according to an embodiment of the present disclosure, and FIG. 4 is another structural schematic diagram of a charging device according to an embodiment of the present disclosure.

As illustrated in FIG. 3, the charging cover control apparatus 200 further includes a second signal sender 25, the second signal sender sends a wake-up signal to surroundings of the electric vehicle when the electric vehicle needs to be charged.

As illustrated in FIG. 4, the charging device 100 further includes a first signal receiver 14, the first signal receiver receives the wake-up signal sent by the charging cover control device 200, so that the response controller 11 works.

Specifically, when the electric vehicle needs to be charged and has approached the charging device, the charging cover control device 200 controls the second signal sender 25 to send the wake-up signal to the surrounding charging device 100, and the wake-up signal includes an activation code for activating the charging device.

When the charging device 100 enters a coverage range of the wake-up signal, the first signal receiver 14 may receive the wake-up signal and send it to the response controller 11. The response controller 11 verifies the activation code in the wake-up signal, and starts when the verification is successful, or sleeps when the verification is failed.

With the activation code verification mechanism, it is possible to avoid the influence of signals sent by other devices on the charging device 100, prevent the charging device 100 from being started by mistake, while making the communication between the charging device 100 and the charging cover control device 200 be safer and more effective.

After the charging device 100 successfully verifies the wake-up signal sent by the charging cover control device 200, the response controller 11 starts to continue to perform the related steps of generating, encrypting and sending the first control instruction, and communicates with the charging cover control device 200, thereby controlling the charging cover to be opened.

In addition to the identity information of the charging device 100, the first control instruction further includes first indication information indicating to open the charging cover.

After decrypting the first control instruction, the decoder 22 in the charging cover control device 200 obtains the identity information of the charging device and the first indication information simultaneously. The processor 23 verifies the identity information in the first control instruction, and when the verification is successful, sends a cover open instruction to the motor driver 24 under the indication of the first indication information, and then the motor driver 24 drives the charging cover motor to open the charging cover.

After the charging of the electric vehicle is finished, the charging cover control device 200 according to the embodiment of the present disclosure may also control the charging cover to automatically close.

In an implementable way, when receiving a close instruction, the response controller 11 in the charging device 100 stops generating the first control instruction, and then stops sending the first control instruction to the charging cover control device 200.

When the charging cover control device 200 does not receive the first control instruction, the processor 23 sends a cover close instruction indicating to close the charging cover to the motor driver 24. The motor driver 24 drives the charging cover motor to close the charging cover under the indication of the cover close instruction, thereby realizing the automatic closing of the charging cover.

In another implementable way, for the charging device 100, when receiving the close instruction, the response controller 11 in the charging device generates a second control instruction and sends it to the encoder 12, and the second control instruction indicates the electric vehicle to close the charging cover, and includes identity information for identifying the charging device.

The encoder 12 receives and encrypts the second control instruction, and sends encrypted second control instruction to the first signal sender 13.

The first signal sender 13 sends the encrypted second control instruction to the charging cover control device provided on the electric vehicle to indicate the electric vehicle to close the charging cover.

For the charging cover control device 200, the second signal receiver 21 receives the second control instruction sent by the charging device 100 and sends the second control instruction to the decoder 22.

The decoder 22 decrypts the second control instruction and sends decrypted second control instruction to the processor 23.

The processor 23 receives the decrypted second control instruction, verifies the identity information in the second control instruction, and sends a cover close instruction to the motor driver under the indication of the second indication information when the verification of the identity information is successful.

The motor driver 24 drives the charging cover motor to close the charging cover under the indication of the cover close instruction.

The charging device 100 is in an encrypted communication with the charging cover control device 200, and during the charging of the electric vehicle, the charging cover is automatically opened when the charging device sends a first control instruction. After the charging is finished, the charging cover is automatically closed when the charging device sends a second control instruction. Therefore, the interference of other signals is prevented, the maloperation on the charging cover is avoided, and the communication safety between the charging device 100 and the charging cover control device 200 is improved.

There are many ways for the response controller 11 in the charging device 100 to send the close instruction. In an implementable way, a switch is provided on the charging device 100 and turned off after the charging is finished, so as to indicate the response controller 11 to be turned off. In another implementable way, the working status of the response controller 11 may be indicated based on whether the wake-up signal sent by the charging cover control device 200 can be received.

During practical applications, the charging cover control device 200 is provided near the charging port. When needing to be charged, the electric vehicle travels into a charging station, and the charging cover control device 200 continuously sends a wake-up signal to surroundings. As the electric vehicle is getting close to the charging device 100, the charging device may receive the wake-up signal and start the response controller 11 to work. After the charging is finished, the electric vehicle travels out of the charging station, and as the electric vehicle is getting away from the charging device 100, the charging device 100 no longer receives the wake-up signal sent by the charging cover control device 200. At this time, the charging device 100 may consider that the charging is finished and indicate the response controller 11 to be turned off.

During implementations, when the wake-up signal is no longer received, the response controller 11 in the charging device 100 may choose to stop sending the first control instruction, so that the charging cover control device can automatically close the charging cover. Alternatively, the response controller 11 may generate a second control instruction and send it to the charging cover control device, so that the charging cover control device can close the charging cover under the control of the second control instruction.

Each of the wake-up signal, the first control instruction and the second control instruction may be configured with one of a low frequency signal, a radio frequency signal, a Bluetooth signal, a mobile communication signal, a WIFI signal or an infrared signal, which is not limited here.

The low-frequency signal has a frequency band of 30 KHz to 300 KHz, and changes slowly with smooth waveform, which is suitable for short-distance and low-cost applications. The low-frequency signal is usually configured with the frequencies of 125 kHz and 134.2 kHz.

The radio frequency signal has a frequency band of 300 kHz to 300 GHz, and is suitable for occasions requiring a long read and write distance and a high read and write speed. The radio frequency signal is usually configured with the frequencies of 433 MHz, 915 MHz, 2.45 GHz, 5.8 GHz, etc.

In consideration that the embodiments of the present disclosure are applied to the scenarios of charging the electric vehicle, the wake-up signal may be configured with a low-frequency signal, and the first control instruction and the second control instruction may be configured with radio frequency signals. The frequency of the wake-up signal is 30 KHz to 300KHz, such as 125 KHz, and the frequencies of the first control instruction and the second control instruction are 300 KHz to 300GHz, such as 433 MHz.

When the wake-up signal is configured with a low-frequency signal and the first control instruction and the second control instruction are configured with radio-frequency signals, as illustrated in FIG. 3, the second signal sender 25 in the charging cover control device 200 is configured to send the wake-up signal, i.e., the low-frequency signal, and a low-frequency antenna 26 may be provided in the charging cover control device to be connected to the second signal sender 25. The second signal receiver 21 is configured to receive the first control instruction and the second control instruction, i.e., the radio frequency signals, and a radio frequency antenna 27 may be provided in the second signal receiver 21. Accordingly, as illustrated in FIG. 4, the first signal receiver 14 in the charging device 100 is configured to receive the wake-up signal, i.e., the low-frequency signal. Thus, a three-dimensional low-frequency antenna 15 may be provided in the first signal receiver 14 to receive and detect a three-dimensional energy field strength of the external space. By superimposing the energy in three-dimensional directions, it is ensured that the first signal receiver 14 in the charging device 100 can detect the same field strength at any angle, thereby effectively preventing the signal from being not received due to interferences.

On the other hand, the embodiments of the present disclosure further provide a charging device and a method for controlling the charging cover control device.

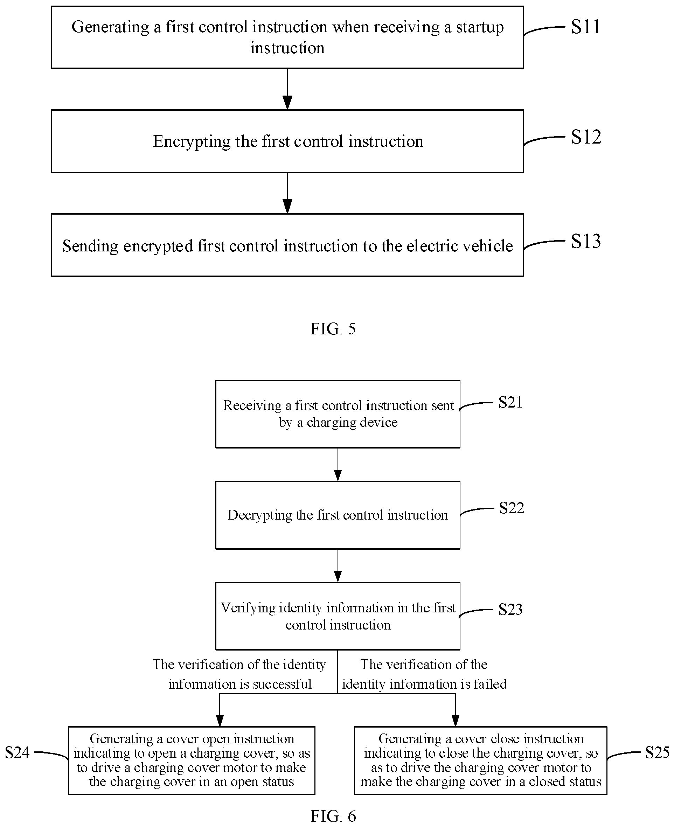

**FIG.** 5 is a flowchart of a method for controlling a charging device according to an embodiment of the present disclosure.

As illustrated in FIG. 5, the method for controlling the charging device includes:
S 11: generating a first control instruction when receiving a startup instruction;
S12: encrypting the first control instruction;
S13: sending encrypted first control instruction to the electric vehicle.

In this embodiment, the first control instruction indicates the electric vehicle to open the charging cover, and includes identity information for identifying the charging device. An identity recognition mechanism is adopted between the charging device and the charging cover control device provided thereon. The control instruction sent by the charging device is an encrypted message, and the repetition rate of the expression form of each control instruction after encryption is extremely low, so that the need to copy the control instruction may be avoided. The charging cover control device will not automatically open the charging cover for charging unless the identity verification of the charging device is finished, thereby improving the charging safety of the electric vehicle.

There are many ways to indicate the start of the charging device. For example, a switch button may be provided on the charging device, and when the switch is turned on, it may be considered that a startup instruction has been issued to the charging device. Alternatively, the electric vehicle may also send a wake-up signal to the charging device to activate the charging device to communicate with the electric vehicle, and the wake-up signal includes an activation code for activating the response controller. When the charging device receives the wake-up signal and successfully verifies the activation code therein, it may be considered that a startup instruction has been issued to the charging device, which is not limited here.

The charging device will not be activated unless the electric vehicle needs to be charged, and generates the first control instruction under an activated status to complete the subsequent operation. Therefore, the resources of the charging device can be saved, and the maloperation on the charging device can be prevented.

After the charging is finished, it is possible to indicate the charging device to be turned off. Similarly, there are many ways to indicate the charging device to be turned off. For example, a switch button is provided on the charging device, and when the switch is turned off, it may be considered that a close instruction has been issued to the charging device. Alternatively, the electric vehicle may also send a wake-up signal to the charging device, and when the charging device does not receive the wake-up signal, it may be considered that a close instruction has been issued to the charging device.

In an implementable way, the charging device stops sending the first control instruction to the electric vehicle when receiving the close instruction. When the charging cover control device provided on the electric vehicle does not receive the first control instruction, it means that the charging has been finished, and the charging cover can be automatically controlled to be closed. By automatically controlling the charging cover to be closed in this way, the control procedure can be simplified.

In another implementable way, when receiving the close instruction, the charging device generates a second control instruction, which indicates the electric vehicle to close the charging cover and includes identity information for identifying the charging device. Similarly, the charging device encrypts the second control instruction and sends encrypted second control instruction to the electric vehicle. And, the electric vehicle will automatically close the charging cover under the indication of the second control instruction. The charging device is in an encrypted communication with the charging cover control device, and during the charging of the electric vehicle, the charging cover is automatically opened when the charging device sends a first control instruction. After the charging is finished, the charging cover is automatically closed when the charging device sends a second control instruction. Therefore, the interference of other signals is prevented, the maloperation on the charging cover is avoided, and the communication safety between the charging device and the charging cover control device is improved.

**FIG.** 6 is a flowchart of a method for controlling a charging cover control device according to an embodiment of the present disclosure.

As illustrated in FIG. 6, the method for controlling the charging cover control device includes:
S21: receiving a first control instruction sent by the charging device;
S22: decrypting the first control instruction;
S23: verifying identity information in the first control instruction; performing step S24 when the verification of the identity information is successful; otherwise, performing step S25;
S24: generating a cover open instruction indicating to open a charging cover, so as to drive a charging cover motor to make the charging cover in an open status;
S25: generating a cover close instruction indicating to close the charging cover, so as to drive the charging cover motor to make the charging cover in a closed status.

In this embodiment, the first control instruction is configured to indicate the electric vehicle to open the charging cover, and includes identity information for identifying the charging device. When the electric vehicle needs to be charged, the charging cover control device receives the first control instruction sent by the charging device, which is an encrypted message and may be decrypted by the charging cover control device, thereby improving the communication safety between the charging device and the charging cover control device. The charging cover control device may also verify the identity information in the first control instruction. When the verification of the identity information is successful, it means that the current charging device is a registered safe device, and the charging cover control device will automatically open the charging cover. When the verification of the identity information is failed, it means that the current charging device is not registered and the safety cannot be guaranteed. At this time, the charging cover control device controls the charging cover to keep a closed status.

By adopting the method for controlling the charging cover control device according to the embodiment of the present disclosure, the charging cover can be automatically controlled to be opened or closed, which saves the redundant action of manually operating the charging cover and is more convenient and faster without touching the vehicle body. In addition, before the charging cover is controlled to be opened, the charging cover control device verifies identity of the charging device, and the charging cover will not be opened unless the identity verification is successful, thereby avoiding the potential safety hazards caused by charging the electric vehicle ad arbitrium by any charging device.

The first control instruction sent by the charging device further includes first indication information indicating to open the charging cover. After receiving the first control instruction and successfully verifying the identity information therein, the charging cover control device controls the charging cover to be opened based on the first indication.

After the charging of the electric vehicle is finished, in an implementable way, the charging device stops sending the first control instruction to the charging cover control device. Then the charging cover control instruction no longer receives the first control instruction, and at this time, the charging cover control device generates a cover close instruction indicating to close the charging cover, so as to drive the charging cover motor to close the charging cover. This control mode can simplify the communication procedure between charging device and charging cover control device, which is more convenient.

In another implementable way, after the charging is finished, the charging cover control device will also receive a second control instruction sent by the charging device, which includes identity information for identifying the charging device and second indication information indicating to close the charging cover. Similarly, the charging cover control device needs to decrypt the second control instruction and verify the identity information therein; and when the verification of the identity information is successful, generates a cover close instruction indicating to close the charging cover, so as to drive the charging cover motor to make the charging cover in a closed status. This control mode can prevent the interference of other signals, avoid the maloperation on the charging cover, and improve the communication safety between the charging device and the charging cover control device.

The charging cover control device according to the embodiment of the present disclosure may actively activate the charging device, so as to start the charging device to send a control instruction to the charging cover control device.

Specifically, when the electric vehicle needs to be charged, the charging cover control device sends a wake-up signal to surroundings of the electric vehicle, and the wake-up signal is configured to activate the charging device to communicate with the electric vehicle, and includes an activation code for activating the charging device.

When entering a coverage range of the wake-up signal, the charging device receives the wake-up signal, so as to enter the working status by verifying the activation code in the wake-up signal. With the activation code verification mechanism, it is possible to avoid the influence of signals sent by other devices on the charging device, prevent the charging device from being started by mistake, while making the communication between the charging device and the charging cover control device be safer and more effective.

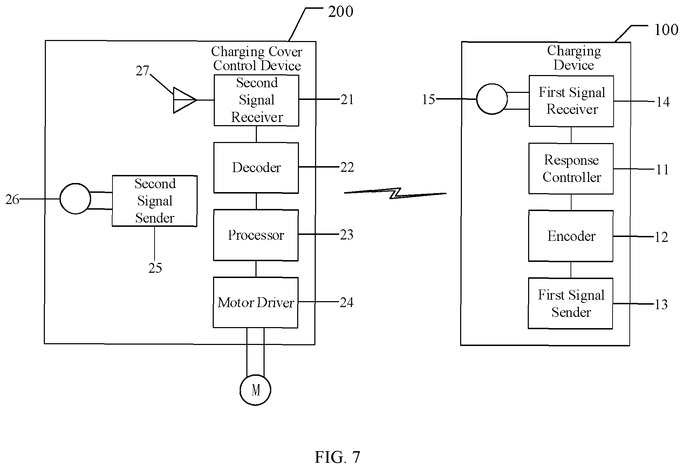

Another aspect of the embodiments of the present disclosure provides a charging system of an electric vehicle, and FIG. 7 is a structural schematic diagram of a charging system according to an embodiment of the present disclosure.

Referring to FIG. 7, the charging system includes a charging device 100 and a charging cover control device 200, and the charging device 100 may be any one of the aforementioned charging devices according to the embodiments of the present disclosure, and the charging cover control device 200 may be any one of the aforementioned charging cover control devices according to the embodiments of the present disclosure.

As illustrated in FIG. 7, the charging device 100 includes a response controller 11, an encoder 12, a first signal sender 13 and a first signal receiver 14, and the encoder 12 is connected to the response controller 11 and the first signal sender 13 respectively, and the first signal receiver 14 is connected to the response controller 11.

The charging cover control device 200 includes a second signal receiver 21, a decoder 22, a processor 23, a motor driver 24, and a second signal sender 25, and the decoder 22 is connected to the second signal receiver 21 and the processor 23 respectively, and the processor 23 is further connected to the motor driver 24. The motor driver 24 is connected to a charging cover driving motor, thereby driving a charging cover to be opened or closed.

The charging system according to the embodiment of the present disclosure can realize the following functions:

when receiving a startup instruction, the charging device 100 generates and encrypts a first control instruction, and sends encrypted first control instruction to the charging cover control device 200, and the first control instruction includes identity information for identifying the charging device;

the charging cover control device 200 receives and decrypts the first control instruction, and verifies the identity information in the first control instruction; and when the verification of the identity information is successful, generates a cover open instruction indicating to open the charging cover, so as to drive the charging cover motor to make the charging cover in an open status.

The control instruction sent by the charging device 100 is an encrypted message, and the repetition rate of the expression form of each control instruction after encryption is extremely low, so that the need to copy the control instruction may be avoided, thereby improving the safety of the information interaction between the charging device 100 and the electric vehicle. During the charging of the electric vehicle, the charging cover control device 200 automatically controls the charging cover to be opened, which saves the redundant action of manually operating the charging cover and is more convenient and faster without touching the vehicle body. In addition, before the charging cover is controlled to be opened, the charging cover control device verifies identity of the charging device, and the charging cover will not be opened unless the identity verification is successful, thereby avoiding the potential safety hazards caused by charging the electric vehicle ad arbitrium by any charging device.

Specifically, for the charging device 100, the response controller 11 generates a first control instruction and sends it to the encoder 12 when receiving the startup instruction, and the first control instruction is configured to indicate the electric vehicle to open the charging cover, and includes identity information for identifying the charging device.

The encoder 12 receives and encrypts the first control instruction, and sends the encrypted first control instruction to the first signal sender 13.

The first signal sender 13 sends the encrypted first control instruction to the charging cover control device 200 provided on the electric vehicle, so as to indicate the electric vehicle to open the charging cover.

For the charging cover control device 200, the second signal receiver 21 receives the first control instruction sent by the charging device 100 and sends the first control instruction to the decoder 22.

The decoder 22 decrypts the first control instruction and sends decrypted first control instruction to the processor 23.

The processor 23 receives decrypted first control instruction, verifies the identity information in the first control instruction, and sends a cover open instruction to the motor driver 24 when the verification of the identity information is successful.

The motor driver 24 drives the charging cover motor based on the cover open instruction to make the charging cover in an open status.

During implementation, there are many ways to start the charging device 100. For example, the charging device 100 may be provided with a switch, which may be a physical button on the charging device. When the charging device picked up by the user approaches the charging port of the electric vehicle, the button may be used to control whether the charging device works or not. When the switch on the charging device 100 is turned on, the response controller 11 is started to work. When the switch on the charging device 100 is turned off, the response controller 11 sleeps.

After the charging device 100 is started, the response controller 11 generates a first control instruction carrying the identity information of the charging device, and the first control instruction is encrypted by the encoder 12 and sent to the charging cover control device 200 of the electric vehicle by the first signal sender 13.

The first control instruction is received by the second signal receiver 21 in the charging cover control device 200, and decrypted by the decoder 22 to obtain the identity information of the charging device. The processor 23 verifies the identity information, and matches the identity information with the registered identity information stored locally. If the matching is successful, it means that the current charging device 100 is a registered safe device. At this time, the processor 23 sends a cover open instruction to the motor driver 24, and the motor driver 24 drives the charging cover motor to open the charging cover. During the charging of the electric vehicle, the charging device 100 continuously sends the first control instruction to the charging cover control device 200, and the charging cover control instruction keeps the charging cover in an open status as long as the verification of the identity information is successful. When the verification of the identity information in the first control instruction is failed, the processor 23 in the charging cover control device 200 sends a cover close instruction indicating to close the charging cover to the motor driver 24. The motor driver 24 drives the charging cover motor based on the cover close instruction to make the charging cover in a closed status, thereby improving the charging safety of the electric vehicle.

In another implementable way, when the electric vehicle needs to be charged, the charging cover control device 200 sends a wake-up signal to surroundings of the electric vehicle, and the wake-up signal is configured to activate the charging device to communicate with the electric vehicle, and includes an activation code for activating the charging device.

The charging device 100 receives and verifies the wake-up signal, and generates a first control instruction when the verification of the activation code in the wake-up signal is successful.

Specifically, when the electric vehicle needs to be charged and has approached the charging device, the charging cover control device 200 controls the second signal sender 25 to send the wake-up signal to the surrounding charging device 100, and the wake-up signal includes an activation code for activating the charging device.

When the charging device 100 enters a coverage range of the wake-up signal, the first signal receiver 14 may receive the wake-up signal and send it to the response controller 11. The response controller 11 verifies the activation code in the wake-up signal, and starts when the verification is successful, or sleeps when the verification is failed.

With the activation code verification mechanism, it is possible to avoid the influence of signals sent by other devices on the charging device 100, prevent the charging device 100 from being started by mistake, while making the communication between the charging device 100 and the charging cover control device 200 be safer and more effective.

After the charging device 100 successfully verifies the wake-up signal sent by the charging cover control device 200, the response controller 11 starts to continue to perform the related steps of generating, encrypting and sending the first control instruction, and communicates with the charging cover control device 200, thereby controlling the charging cover to be opened.

In addition to the identity information of the charging device 100, the first control instruction further includes first indication information indicating to open the charging cover.

At this time, the charging cover control device 200 verifies the identity information in the first control instruction; and when the verification of the identity information is successful, generates a cover open instruction indicating to open the charging cover based on the first indication information, so as to drive the charging cover motor to make the charging cover in an open status.

After decrypting the first control instruction, the decoder 22 in the charging cover control device 200 obtains the identity information of the charging device and the first indication information simultaneously. The processor 23 verifies the identity information in the first control instruction, and when the verification is successful, sends a cover open instruction to the motor driver 24 under the indication of the first indication information, and then the motor driver 24 drives the charging cover motor to open the charging cover.

After the charging of the electric vehicle is finished, the charging cover control device 200 according to the embodiment of the present disclosure may also control the charging cover to be automatically closed.

In an implementable way, when the wake-up signal is not received, the charging device 100 stops sending the first control instruction;

When the first control instruction is not received, the charging cover control device 200 generates a cover close instruction indicating to close the charging cover, so as to drive the charging cover motor to make the charging cover in a closed status.

After the charging is finished, the electric vehicle travels out of the charging station, and as the electric vehicle is getting away from the charging device 100, the charging device 100 no longer receives the wake-up signal sent by the charging cover control device 200. At this time, the charging device 100 may consider that the charging is finished, thereby driving the charging cover motor to make the charging cover in a closed status.

In another implementable way, when the wake-up signal is not received, the charging device 100 generates and encrypts a second control instruction, and sends encrypted second control instruction to the charging cover control device 200, and the second control instruction includes identity information for identifying the charging device;

the charging cover control device 200 receives and decrypts the second control instruction, and verifies the identity information in the second control instruction; and when the verification of the identity information is successful, generates a cover close instruction indicating to close the charging cover, so as to drive the charging cover motor to make the charging cover in a closed status.

Specifically, for the charging device 100, when the wake-up signal is not received, the response controller 11 in the charging device generates a second control instruction and sends it to the encoder 12, and the second control instruction is configured to indicate the electric vehicle to close the charging cover and includes identity information for identifying the charging device.

The encoder 12 receives and encrypts the second control instruction, and sends the encrypted second control instruction to the first signal sender 13.

The first signal sender 13 sends the encrypted second control instruction to the charging cover control device provided on the electric vehicle to indicate the electric vehicle to close the charging cover.

For the charging cover control device 200, the second signal receiver 21 receives the second control instruction sent by the charging device 100 and sends the second control instruction to the decoder 22.

The decoder 22 decrypts the second control instruction and sends decrypted second control instruction to the processor 23.

The processor 23 receives the decrypted second control instruction, verifies the identity information in the second control instruction, and sends a cover close instruction to the motor driver under the indication of the second indication information when the verification of the identity information is successful.

The motor driver 24 drives the charging cover motor to close the charging cover under the indication of the cover close instruction.

The charging device 100 is in an encrypted communication with the charging cover control device 200, and during the charging of the electric vehicle, the charging cover is automatically opened when the charging device sends a first control instruction. After the charging is finished, the charging cover is automatically closed when the charging device sends a second control instruction. Therefore, the interference of other signals is prevented, the maloperation on the charging cover is avoided, and the communication safety between the charging device 100 and the charging cover control device 200 is improved.

The embodiments of the present disclosure improve the charging device for charging the electric vehicle and the charging cover control device connected to the charging cover motor. When receiving a startup instruction, the charging device generates and encrypts a first control instruction, and sends encrypted first control instruction to the charging cover control device, and the first control instruction is configured to indicate the electric vehicle to open the charging cover, and includes identity information for identifying the charging device; the charging cover control device receives and decrypts the first control instruction, and verifies the identity information in the first control instruction; and when the verification of the identity information is successful, generates a cover open instruction indicating to open the charging cover, so as to drive the charging cover motor to make the charging cover in an open status. Through the encrypted communication between the charging device and the charging cover control device, the charging cover can be automatically controlled to be opened, which saves the redundant action of manually operating the charging cover and is more convenient and faster without touching the vehicle body. In addition, before the charging cover is controlled to be opened, the charging cover control device verifies identity of the charging device, and the charging cover will not be opened unless the identity verification is successful, thereby avoiding the potential safety hazards caused by charging the electric vehicle ad arbitrium by any charging device.

Although the optional embodiments of the present disclosure have been described, those skilled in the art may make additional changes and modifications to these embodiments once acquiring the basic inventive concepts. Therefore, the appended claims are intended to be interpreted as including the optional embodiment and all changes and modifications that fall within the scope of the present disclosure.

Obviously, those skilled in the art may make various modifications and variations to the present disclosure without departing from the spirit and scope of the present disclosure. Therefore, the present disclosure is intended to include those modifications and variations provided that they fall within the scope of the claims and the equivalents thereof.

## Claims

1. A charging device of an electric vehicle, comprising: a response controller, an encoder and a first signal sender, wherein
the response controller is configured to send a first control instruction to the encoder when receiving a startup instruction, wherein the first control instruction comprises identity information for identifying the charging device;
the encoder is configured to receive and encrypt the first control instruction, and send encrypted first control instruction to the first signal sender; and
the first signal sender is configured to send the encrypted first control instruction to the electric vehicle, so that a charging cover of the electric vehicle is in an open status.

2. The charging device according to claim 1, further comprising a first signal receiver;
the first signal receiver is configured to receive a wake-up signal sent by the electric vehicle and send the wake-up signal to the response controller, wherein the wake-up signal is configured to activate the charging device to communicate with the electric vehicle and comprises an activation code for activating the response controller; and
the response controller is configured to receive and verify the wake-up signal, and send the first control instruction to the encoder when the verification of the activation code in the wake-up signal is successful.

3. The charging device according to claim 2, wherein the response controller is configured to stop sending the first control instruction to the electric vehicle when the wake-up signal is not received, so that the charging cover of the electric vehicle is in a closed status.

4. The charging device according to claim 2, wherein the response controller is configured to send a second control instruction to the encoder when the wake-up signal is not received, wherein the second control instruction comprises identity information for identifying the charging device;
the encoder is configured to receive and encrypt the second control instruction, and send encrypted second control instruction to the first signal sender; and
the first signal sender is configured to send the encrypted second control instruction to the electric vehicle, so that the charging cover of the electric vehicle is in a closed status.

5. The charging device according to claim 4, wherein the wake-up signal is one of a low frequency signal, a radio frequency signal, a Bluetooth signal, a mobile communication signal, a WIFI signal or an infrared signal;
the first control instruction is one of a low frequency signal, a radio frequency signal, a Bluetooth signal, a mobile communication signal, a WIFI signal or an infrared signal; and the second control instruction is one of a low frequency signal, a radio frequency signal, a Bluetooth signal, a mobile communication signal, a WIFI signal or an infrared signal.

6. The charging device according to claim 5, wherein the wake-up signal is the low-frequency signal, the first control instruction is the radio-frequency signal, and the second control instruction is the radio-frequency signal.

7. The charging device according to claim 6, wherein a frequency of the wake-up signal is 30 KHz to 300 KHz, a frequency of the first control instruction is 300 KHz to 300 GHz, and a frequency of the second control instruction is 300 KHz to 300 GHz.

8. The charging device according to claim 6, wherein a three-dimensional low-frequency antenna is provided in the first signal receiver.

9. A charging cover control device of an electric vehicle, comprising: a second signal receiver, a decoder, a processor and a motor driver, wherein the motor driver is connected to a charging cover motor of the electric vehicle, and the charging cover motor drives the charging cover to be opened or closed;
the second signal receiver is configured to receive a first control instruction sent by the charging device and send the first control instruction to the decoder, wherein the first control instruction comprises identity information for identifying the charging device;
the decoder is configured to decrypt the first control instruction and send decrypted first control instruction to the processor;
the processor is configured to receive decrypted first control instruction, verify the identity information in the first control instruction, and send a cover open instruction indicating to open the charging cover to the motor driver when the verification of the identity information is successful; and
the motor driver is configured to drive the charging cover motor based on the cover open instruction to make the charging cover in an open status.

10. The charging cover control device according to claim 9, further comprising: a second signal sender;
the second signal sender is configured to send a wake-up signal to surroundings of the electric vehicle when the electric vehicle needs to be charged, wherein the wake-up signal is configured to activate the charging device to communicate with the electric vehicle and comprises an activation code for activating the charging device.

11. The charging cover control device according to claim 9 or 10, wherein the first control instruction further comprises first indication information indicating to open the charging cover;
the processor is configured to verify the identity information in the first control instruction, and send a cover open instruction indicating to open the charging cover to the motor driver based on the first indication information when the verification of the identity information is successful.

12. The charging cover control device according to claim 9 or 10, wherein the processor is configured to verify the identity information in the first control instruction, and send a cover close instruction indicating to close the charging cover to the motor driver when the verification of the identity information is failed;
the motor driver is configured to drive the charging cover motor based on the cover close instruction to make the charging cover in a closed status.

13. The charging cover control device according to claim 9 or 10, wherein the processor is configured to send a cover close instruction indicating to close the charging cover to the motor driver when the first control instruction is not received; and
the motor driver is configured to drive the charging cover motor based on the cover close instruction to make the charging cover in a closed status.

14. The charging cover control device according to claim 10, wherein the second signal receiver is configured to receive a second control instruction sent by the charging device and send the second control instruction to the decoder, wherein the second control instruction comprises identity information for identifying the charging device and second indication information indicating to close the charging cover;
the decoder is configured to decrypt the second control instruction and send decrypted second control instruction to the processor;
the processor is configured to receive the decrypted second control instruction, verify the identity information in the second control instruction, and send a cover close instruction indicating to close the charging cover to the motor driver based on the second indication information when the verification of the identity information is successful; and
the motor driver is configured to drive the charging cover motor based on the cover close instruction to make the charging cover in a closed status.

15. The charging cover control device according to claim 14, wherein the wake-up signal is one of a low frequency signal, a radio frequency signal, a Bluetooth signal, a mobile communication signal, a WIFI signal or an infrared signal;
the first control instruction is one of a low frequency signal, a radio frequency signal, a Bluetooth signal, a mobile communication signal, a WIFI signal or an infrared signal; and the second control instruction is one of a low frequency signal, a radio frequency signal, a Bluetooth signal, a mobile communication signal, a WIFI signal or an infrared signal.

16. The charging cover control device according to claim 15, wherein the wake-up signal is the low-frequency signal, the first control instruction is the radio-frequency signal, and the second control instruction is the radio-frequency signal.

17. The charging cover control device according to claim 16, wherein a frequency of the wake-up signal is 30 KHz to 300 KHz, a frequency of the first control instruction is 300 KHz to 300 GHz, and a frequency of the second control instruction is 300 KHz to 300 GHz.

18. The charging cover control device according to claim 10, wherein a radio frequency antenna is provided in the second signal receiver.

19. An electric vehicle, comprising the charging cover control device according to any one of claims 9 to 18; the charging cover control device is connected to a charging cover motor of the electric vehicle, and the charging cover motor drives a charging cover to be opened or closed.

20. A method for controlling a charging device of an electric vehicle, comprising:
generating a first control instruction by a charging device when receiving a startup instruction, wherein the first control instruction comprises identity information for identifying the charging device;
encrypting the first control instruction by the charging device; and
sending encrypted first control instruction to the electric vehicle by the charging device.

21. The method according to claim 20, wherein generating a first control instruction by a charging device when receiving a startup instruction comprises:
when receiving, by the charging device, a wake-up signal sent by the electric vehicle, verifying the wake-up signal, wherein the wake-up signal is configured to activate the charging device to communicate with the electric vehicle and comprises an activation code for activating the response controller; and
generating the first control instruction by the charging device when the verification of the activation code in the wake-up signal is successful.

22. The method according to claim 21, further comprising:
when the wake-up signal is not received, stopping sending the first control instruction to the electric vehicle by the charging device, so that the charging cover of the electric vehicle is in a closed status.

23. The method of claim 21, further comprising:
when the wake-up signal is not received, generating a second control instruction by the charging device, wherein the second control instruction comprises identity information for identifying the charging device;
encrypting the second control instruction by the charging device; and
sending encrypted second control instruction to the electric vehicle by the charging device, so that the charging cover of the electric vehicle is in a closed status.

24. A method for controlling a charging cover control device of an electric vehicle, comprising:
receiving, by charging cover control device, a first control instruction sent by a charging device, wherein the first control instruction comprises identity information for identifying the charging device;
decrypting the first control instruction by the charging cover control device; and
verifying the identity information in the first control instruction by the charging cover control device;
when the verification of the identity information is successful, generating, by the charging cover control device, a cover open instruction indicating to open the charging cover, so as to drive the charging cover motor to make the charging cover in an open status.

25. The method according to claim 24, wherein the first control instruction further comprises first indication information indicating to open the charging cover;
when the verification of the identity information is successful, generating, by the charging cover control device, a cover open instruction indicating to open the charging cover comprises:
when the verification of the identity information is successful, generating, by the charging cover control device, a cover open instruction indicating to open the charging cover, based on the first indication information.

26. The method according to claim 24 or 25, further comprising:
when the verification of the identity information is failed, generating, by the charging cover control device, a cover close instruction indicating to close the charging cover, so as to drive the charging cover motor to make the charging cover in a closed status.

27. The method according to claim 24 or 25, further comprising:
when the first control instruction sent by the charging device is not received, generating, by the charging cover control device, a cover close instruction indicating to close the charging cover, so as to drive the charging cover motor to make the charging cover in a closed status.

28. The method according to claim 24 or 25, further comprising:
receiving, by the charging cover control device, a second control instruction sent by the charging device, wherein the second control instruction comprises identity information for identifying the charging device and second indication information indicating to close the charging cover;
decrypting the second control instruction by the charging cover control device;
verifying the identity information in the second control instruction by the charging cover control device; and
when the verification of the identity information is successful, generating, by the charging cover control device, a cover close instruction indicating to close the charging cover, so as to drive the charging cover motor to make the charging cover in a closed status.

29. The method according to claim 24 or 25, wherein before receiving, by the charging cover control device, the first control instruction sent by the charging device, the method further comprises:
sending a wake-up signal to surroundings of the electric vehicle by the charging cover control device when the electric vehicle needs to be charged, wherein the wake-up signal is configured to activate the charging device to communicate with the electric vehicle and comprises an activation code for activating the charging device.

30. A method for controlling a charging cover of an electric vehicle, comprising:
when receiving, by a charging device, a startup instruction, generating and encrypting a first control instruction, and sending encrypted first control instruction to the charging cover control device, wherein the first control instruction comprises identity information for identifying the charging device;
by the charging cover control device, receiving and decrypting the first control instruction, and verifying the identity information in the first control instruction; and when the verification of the identity information is successful, generating a cover open instruction indicating to open the charging cover, so as to drive the charging cover motor to make the charging cover in an open status.

31. A charging system of an electric vehicle, comprising the charging device according to any one of claims 1 to 8 and the charging cover control device according to any one of claims 9 to 18, wherein,
when receiving a startup instruction, the charging device generates and encrypts a first control instruction, and sends encrypted first control instruction to the charging cover control device, wherein the first control instruction comprises identity information for identifying the charging device;
the charging cover control device receives and decrypts the first control instruction, and verifies the identity information in the first control instruction; and when the verification of the identity information is successful, generates a cover open instruction indicating to open the charging cover, so as to drive the charging cover motor to make the charging cover in an open status.

32. The charging system according to claim 31, wherein the charging cover control device sends a wake-up signal to surroundings of the electric vehicle when the electric vehicle needs to be charged, wherein the wake-up signal is configured to activate the charging device to communicate with the electric vehicle and comprises an activation code for activating the charging device;
the charging device receives and verifies the wake-up signal, and generates the first control instruction when the verification of the activation code in the wake-up signal is successful.

33. The charging system according to claim 31 or 32, wherein the first control instruction further comprises first indication information indicating to open the charging cover;
the charging cover control device verifies the identity information in the first control instruction, and when the verification of the identity information is successful, generates a cover open instruction indicating to open the charging cover based on the first indication information, so as to drive the charging cover motor to make the charging cover in an open status.

34. The charging system according to claim 32, wherein the charging device stops sending the first control instruction when the wake-up signal is not received;
when the first control instruction is not received, the charging cover control device generates a cover close instruction indicating to close the charging cover, so as to drive the charging cover motor to make the charging cover in a closed status.

35. The charging system according to claim 32, wherein when the wake-up signal is not received, the charging device generates and encrypts a second control instruction, and sends encrypted second control instruction to the charging cover control device, wherein the second control instruction comprises identity information for identifying the charging device;
the charging cover control device receives and decrypts the second control instruction, and verifies the identity information in the second control instruction; and when the verification of the identity information is successful, generates a cover close instruction indicating to close the charging cover, so as to drive the charging cover motor to make the charging cover in a closed status.
